# EUROPEAN PATENT APPLICATION

(11) **EP 2 110 741 A1**
(43) Date of publication of application: **21.10.2009**
(21) Application number: 08007294.5
(22) Date of filing: 14.04.2008
(51) Int. Cl.: G06F 9/44

(54) **A method and a system for transforming an object model**

(71) Applicant: SIEMENS AKTIENGESELLSCHAFT, 80333 München (DE)
(72) Inventor: Olkhovich, Lev, 85521 Ottobrunn (DE); Wasgint, Rainer, 81739 München (DE)

(57) **Abstract**

The invention relates to a method and a system for transforming an object model by executing a transformation workflow consisting of transformation step instances (TSI), wherein the said transformation workflow is automatically generated on the basis of transformation artifacts (TA) produced or used as inputs by transformation step instances (TSI) derived from pre-defined transformation step templates (TST).

## Description

The invention relates to a method and a system for transforming an object model, in particular an object model comprising an attributed graph having model elements formed by nodes and edges.

There are different kinds of models such as UML-models, SDL-models, BPEL-Models, ERD-models or domain specific models for describing complex software products or complex heterogeneous software systems. These software products or software systems typically comprise different modules, i.e. software modules or hardware modules. These modules can be implemented in different technologies. For example, software models can be written in different programming languages or running under different operating systems using different data base systems. When developing or implementing a complex software product or software system, the architecture of the product or system can be shown in a graphical model, i.e. an object model of the software product or software system comprising an attributed graph.

The object model comprises model elements such as nodes and edges. These edges connect nodes of the graph showing an interaction between the nodes. For example, an architecture of a software product or a software system can be described as an UML-model (unified model language). The same software product or software system can be described in different object models showing different architectures to implement the system or product. This MDA (model driven architecture) tools for each object model prototype can be generated, i.e. an executable software code to compare the performance of the different models with each other. In a model driven architecture (MDA), the model based artifacts are generated such that the object model is continuously refined until final artifacts are available. These final artifacts normally comprise source code which after transformation into object code can be executed. Such model driven refinance is difficult to implement for real software models, because an actual software system is usually highly heterogeneous. A heterogeneous software system comprises numerous different technologies and platforms at the same time. Moreover, as new platforms and technologies emerge on a regular basis, the transformation of an object model into a target object model of a more refined level is not always possible. In model driven architectures (MDA) refining of an object model, i.e. the transformation of an object model into a target object model, specifies such refinance with semi-declarative QVT (query view transformation) scripts. Since there is no complete QVT implementation until now, there are a number of partial implementations along with alternative approaches which do not conform to the QVT standard. Furthermore, the QVT (query view transformation) scripts are monolithic in nature, not supporting any extensibility. Because of these limitations, a model based generation of either code (such as source code) or models is usually implemented using pluggable cartridges such as in AndroMDA, one of the typical open source MDA tool kits. Each cartridge supports only a specific platform combined with a template based generation mechanism. Further, this conventional approach has the limitation that the cartridges themselves are not extensible and that cross-and multi-platform generations are difficult to implement. Furthermore, a round trip support is limited due to template based text generation.

Accordingly, it is an object of the present invention to provide a method and a system allowing a flexible platform independent transformation of an object model.

This object is achieved by a method comprising the features of claim 1.

The invention provides a method for transforming an object model by executing a transformation workflow consisting of transformation step instances, wherein said transformation workflow is automatically generated on the basis of transformation artifacts produced or used as inputs by transformation step instances derived from pre-defined transformation step templates.

In an embodiment of the method according to the present invention, the transformation workflow is generated by connecting each transformation step instance using transformation artifacts as inputs with the transformation step instance producing said transformation artifacts (TA).

In an embodiment of the method according to the present invention, said object model comprises a UML-model, a SDL-model, a BPEL-model, an ERD-model or a domain specific model.

In an embodiment of the method according to the present invention, the object model is transformed into a target object model.

In an embodiment of the method according to the present invention, the object model is transformed into heterogeneous software product artifacts.

In an embodiment of the method according to the present invention, both the object model and the target object model comprises an attributed graph having model elements formed by nodes and edges.

In an embodiment of the method according to the present invention, said transformation artifacts are elements of an object model.

In an embodiment of the method according to the present invention, the transformation artifacts are elements of a target object model.

In an embodiment of the method according to the present invention, the transformation step templates of the transformation step instances are loaded from a library.

In an embodiment of the method according to the present invention, each transformation step template comprises an executable transformation step compatibility checker and an executable transformation step code.

In an embodiment of the method according to the present invention, each transformation step compatibility checker of a transformation step template is executed [for each original model node] to check whether said transformation step template is compatible with a node of said object model.

In an embodiment of the method according to the present invention, if the transformation step template is compatible with the node of said object model, a transformation step instance of said transformation step template is generated and transformation artifact identifiers of transformation artifacts produced or used as input by said transformation step instance are registered within a transformation registry as produced or used as inputs by the transformation step instance.

In an embodiment of the method according to the present invention, the transformation workflow is generated by merging identical transformation artifact identifiers within the transformation registry.

In an embodiment of the method according to the present invention, transformation step instances not located on transformation workflow paths connecting a model element of the object model with a model element of the target object model are deleted.

In an embodiment of the method according to the present invention, the transformation step compatibility checker of a transformation step template registers transformation artifact identifiers of transformation artifacts within said transformation registry as used as inputs by different transformation step instances.

In an embodiment of the method according to the present invention, a transformation step sequence list is generated for the transformation workflow indicating a sequence to execute the transformation step instances of said transformation workflow.

In an embodiment of the method according to the present invention, the transformation step sequence list is generated by means of a Dijkstra-algorithm.

In an embodiment of the method according to the present invention, the deletion of said transformation steps is performed by means of a reversed Dijkstra-algorithm.

In an embodiment of the method according to the present invention, the transformation step instances are executed by executing transformation step code from transformation step templates correspondent to said transformation step instances.

In an embodiment of the method according to the present invention, the transformation step code invokes an external application program.

In an embodiment of the method according to the present invention, the transformation workflow is executed by a computer program.

The invention further provides a MDA (model driven architecture)-tool program module comprising instructions for performing a method for transforming an object model by executing a transformation workflow consisting of transformation step instances, wherein said transformation workflow is automatically generated on the basis of transformation artifacts produced or used as inputs by transformation step instances derived from pre-defined transformation step templates.

The invention further provides a data carrier for storing such a computer program.

The invention further provides a transformation system which transforms an object model into a target object model or into heterogeneous software product artifacts by executing a transformation workflow automatically generated on the basis of transformation artifacts produced or used as inputs by transformation step instances derived from pre-defined transformation step templates, which are stored in a library of said transformation system.

In an embodiment of the transformation system according to the present invention, the transformation step template comprises an executable transformation step compatibility checker and an executable transformation step code.

In the following, preferred embodiments of the method and the system for transforming an object model according to the present invention are described with reference to the enclosed figures.
- Fig. 1: shows a flow-chart of a possible embodiment of the method for transforming an object model according to the present invention;
- Fig. 2: shows a diagram for illustrating a method for transforming an object model according to the present invention;
- Fig. 3: shows an example for a dependency graph for illustrating an embodiment of the method for transforming an object model according to the present invention;
- Fig. 4: shows a diagram of an object model for illustrating the method for transforming such an object model according to the present invention;
- Fig. 5: shows a diagram for illustrating a possible additional step for deleting target object model elements according to an embodiment of the method according to the present invention;
- Fig. 6: shows instantiated transformation steps and transformation artifacts for a sample model with two modules for illustrating the method for transforming an object model according to the present invention;

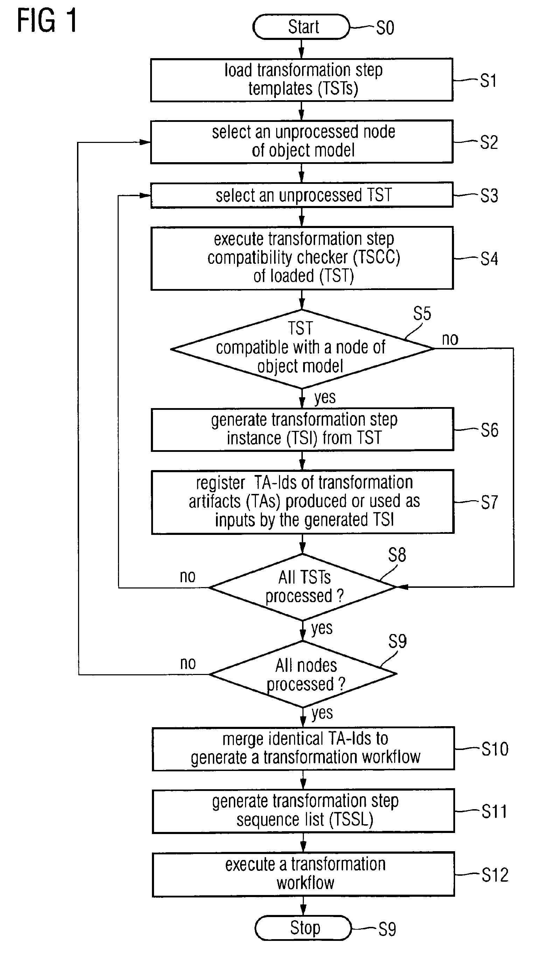

The method for transforming an object model according to the present invention comprises several steps as shown in Fig. 1. The method transforms an object model by executing the transformation workflow consisting of transformation step instances TSI. The method transforms an object model into a target object model. This object model can for example comprise an UML-model, a SDL-model, a BPEL-model, a ERD-model or domain specific models. Both the object model and the target object model can comprise an attributed graph having model elements formed by nodes and edges. The original object model can be transformed into a target object model or into heterogeneous software product artifacts such as source code artifacts.

The transformation workflow is generated automatically on the basis of transformation artifacts produced or used as inputs by transformation step instances TST derived from predefined transformation step templates TST.

The method for transforming an object model according to the present invention comprises several steps as shown in Fig. 1. After a start step S0 transformation step templates TST are loaded in a first step S1 from library of the transformation system. Each transformation step template TST comprises an executable transformation step compatibility checker TSCC and an executable transformation step code TSC.

Further steps S2-S9 form a loop over all nodes of the object model, where step S2 selects a new unprocessed node of the object model.

Steps S3-S8 form a loop over all the loaded transformation templates (TSTs). This loop is repeated for each node of the object model. Step S4 selects a new unprocessed TST.

In step S4, the transformation step compatibility checker TSCC of the selected TST is executed to check whether the transformation step template TST is compatible with the selected node.

In step S5, based on the results of the_step S4, it is decided whether the transformation step template is compatible with the node of the object model.

If the selected transformation step template TST is compatible with the selected node of the object model, a transformation step instance TSI of the transformation step template TST is generated in step S6. Further, the transformation artifact identifiers TA-ID of transformation artifacts TA produced or used as input by the generated transformation step instance TSI are registered within a transformation registry in step S7.

In step S8, if all the TSTs were processed, the method proceeds to step S9. Otherwise, it returns to step S3 to form a loop.

In step S8, if all the nodes of the object model to be transformed were processed, the method proceeds to step S10. Otherwise, it returns to step S2 to form a loop.

After the steps S3-S9 have been completed for each node of the object model to be transformed for each transformation step template loaded during the step S1. The transformation workflow is generated in the step S10 by merging identical transformation artifact identifiers (TA-ID) within the transformation registry.

In a further step S11, a transformation step sequence list TSSL is generated for the transformation work flow indicating a sequence to execute the transformation step instances TSI of said transformation work flow. In a possible embodiment, the transformation step sequence list TSSL is generated by means of a Dijkstra-algorithm.

In a further step S12, the transformation work flow is executed. In a possible embodiment, the transformation work flow is executed by a computer program loaded from a data carrier or from a program memory. Executing the transformation work flow, the transformation instances TSI as indicated in the generated transformation step sequence list TSSL are executed. This is done by executing the transformation step code TSC in transformation step templates TST corresponding to said transformation step instances TSI. In a possible embodiment, the transformation step code TSC invokes an external application program. The process stops in step S13.

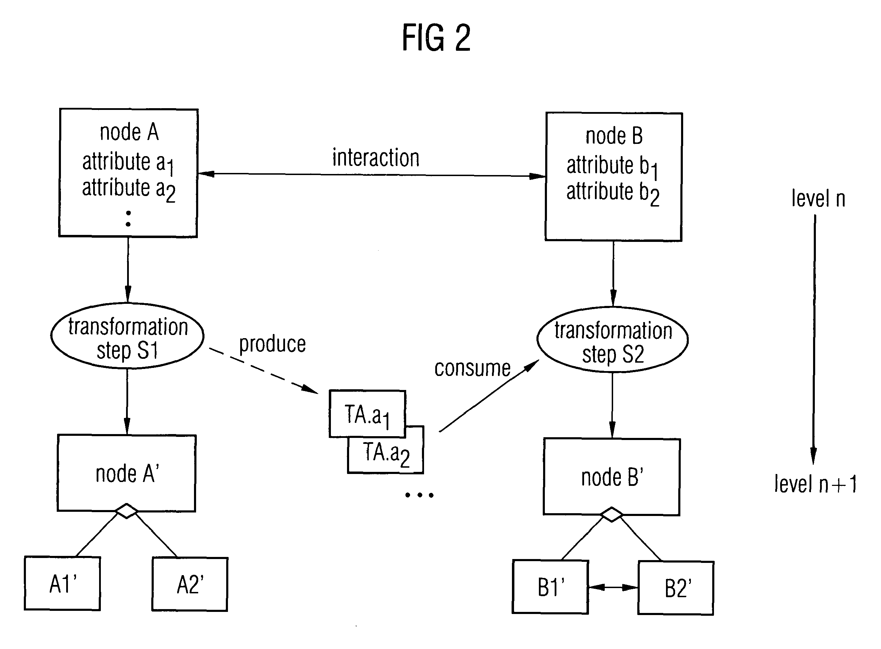

Fig. 2 shows a diagram for illustrating the method for transforming an object model according to the present invention. In the given example, there are two nodes A, B of an object model such as an UML-object model. This object model is to be transformed into a refined target object model of a lower level, i. e. in the given example, the object model of a given level n is transformed into a target object model of a lower level n + 1. As can be seen from Fig. 2 both, the object model and the target object model, comprise this an attributed graph having model elements formed by nodes and edges. An edge indicates an interaction between nodes such as a node invoking another node. Each node has different attributes such as the technology or the platform. For example, attribute a1 of node A can indicate that the technology of this mode is Java [EJB] whereas attribute b1 of node B indicates that the technology of that node is plain Java. Further examples for attributes are data bases for storing node A or a network address for executing of node B.

A transformation step for transforming node A into a corresponding submodel comprising nodes A', A1', A2' produces different transformation artifacts TA corresponding to the different attributes a1, a2 of node A. These transformation artifacts TA can be consumed by an transformation step S2 transforming node B comprising attributes b1, b2 to a submodule comprising nodes B', B1' and B2'.

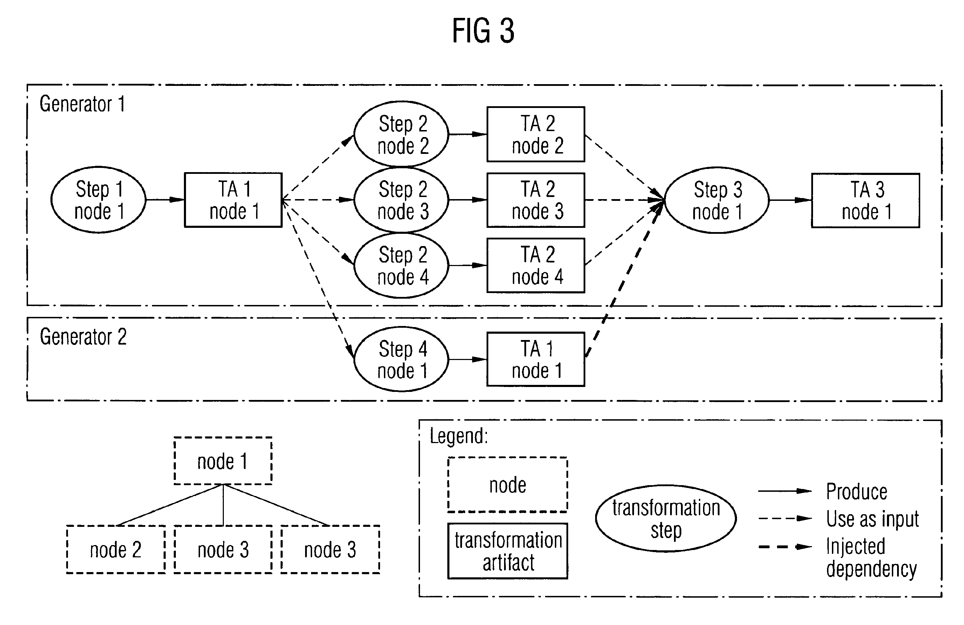

Fig. 3 shows a further diagram for illustrating the method for transforming an object model according to the present invention. A transformation step instance 1 produces a transformation artifact TA1 being consumed by transformation step instances 2, 4 which in turn generate transformation artifacts TA. There can be multiple transformation step instances for the same node of the model as well as multiple node-associated dependencies and transformation artifacts TA.

Extra flexibility can be achieved by allowing additional dependencies to already registered transformation step instances. This makes it possible to extend already implemented transformations even when those were not designed to be extendable. As can be seen from Fig. 3, workflow is created using the transformation step instances, transformation artifacts they produce or use as input This workflow can then be analyzed to produce a necessary transformation step instance execution order, i. e. a information step instance sequence list TSSL. The resulting or transformation step instances are then executed one by one. In a possible embodiment, the transformation step templates can be independent plug-ins. The transformation framework needs not to be aware of any specific plug-ins in advance.

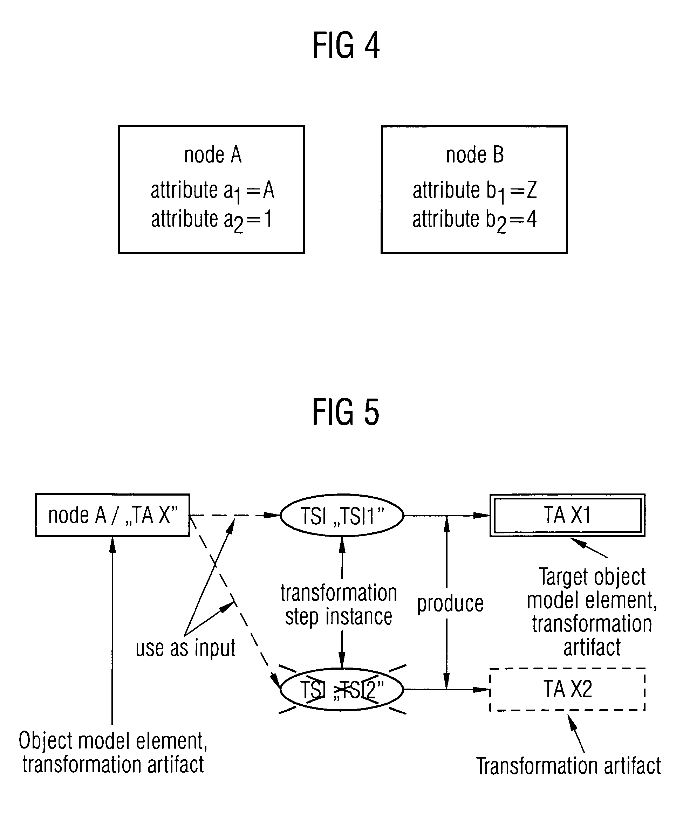

Fig. 4 shows a simple example of an object model to be transformed. A node such as node A can also be a transformation artifact TA with a transformation artifact ID TA-ID. For example, the transformation artifact TA-ID of the node A forming a transformation artifact "TA X", can comprise for example the following code:

IF Node.a1 = Z THEN COMPATIBLE:
1. CREATE Transformation Step Instance (TSI) "TSI 1"
2. REGISTER INPUT TA-ID "TA X" for TSI "TSI 1"
3. REGISTER OUTPUT TA-ID "TA X1" for TSI "TSI 1"

### ELSE INCOMPATIBLE

"TA X1" can also be an element of the target object model.

An example for a transformation step code TSC of a transformation step template TST for the exemplary object model of Fig. 4 is:
INPUTS: "TA X" = Transformation Artifact (TA) with TA-ID "TA X"
OUTPUTS: "TA X1" = Transformation Artifact (TA) with TA-ID "TA X1"

### EXECUTABLE CODE:

1. CREATE NEW Transformation Artifact "TA X1"
2. SET attribute "TA X1.a1" to the value of "TA X.al"

In a possible embodiment, after the generation of a transformation work flow in step S1 as shown in Fig. 1 the transformation step instances TSI which are not located on transformation work flow paths connecting a model element of the object model with a model element of the target object model are deleted. Fig. 5 illustrates by way of example for deletion of transformation step instance "TSI2" because the transformation artifact "TA X2" is not a target object model element. In a possible embodiment, the deletion of the transformation step is performed by means of a reversed Dijkstra-algorithm.

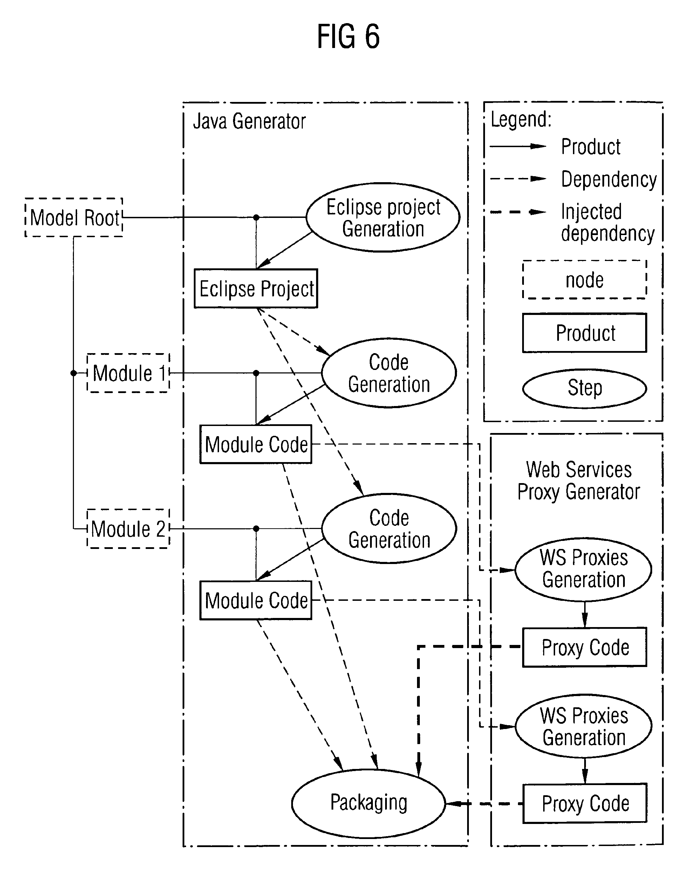

Fig. 6 shows an example of instantiated transformation steps and transformation artifacts TA for a sample model having two models. In the given example, the model consists of two types of nodes. The first type of nodes is a model root representing a root element containing the second type of nodes. The second type of nodes is formed by modules resembling a number of nested module elements. The generator produces in the given example eclipse-specific Java project files and a Java source file for each module element. Additionally, compilation/packaging is performed after the Java files have been generated. When producing the Java sources, the already generated eclipse project is used to determine the placement of the source files. Accordingly, a code generation step depends on the Eclipsed project files. The code is provided for each module in order to perform the packaging. Consequently, the packaging step depends on module code products for all modules. A web service proxy generator uses pre-generated Java sources to produce Java sources for proxy classes. Accordingly, a WS proxy generation step depends on the module code product of the Java generator. There is a dependency injected for the packaging step. As additional sources are being produced, it is necessary to delay the packaging. The resulting instantiated transformation steps and transformation artifacts for the sample module are shown in Fig. 3.

## Claims

1. A method for transforming an object model by executing a transformation workflow consisting of transformation step instances (TSI), wherein the said transformation workflow is automatically generated on the basis of transformation artifacts (TA) produced or used as inputs by transformation step instances (TSI) derived from pre-defined transformation step templates (TST).

2. The method according to claim 1,
wherein said transformation workflow is generated by connecting each transformation step instance (TSI) using transformation artifacts (TA) as inputs with the transformation step instance (TSI) producing said transformation artifacts (TA).

3. The method according to claim 1,
wherein said object model comprises
a UML-model,
a SDL-model,
a BPEL-model,
a ERD-model and
domain specific models.

4. The method according to claim 1,
wherein said object model is transformed into a target object model.

5. The method according to claim 1,
wherein said object model is transformed into heterogeneous software product artifacts.

6. The method according to claims 1 and 4,
wherein both the object model and the target object model comprises an attributed graph having model elements formed by nodes and edges.

7. The method according to claims 1 and 6,
wherein said transformation artifacts (TA) are elements of an object model.

8. The method according to claims 1 and 6,
wherein said transformation artifacts (TA) are elements of target object model.

9. The method according to claim 1,
wherein transformation step templates (TST) of the transformation step instances (TSI) are loaded from a library.

10. The method according to claim 9,
wherein each transformation step template (TST) comprises an executable transformation step compatibility checker (TSCC) and
an executable transformation step code (TSC).

11. The method according to claims 9 and 10,
wherein for each node of said object model, each transformation step compatibility checker (TSCC) of a transformation step template (TST) is executed to check whether said transformation step template (TST) is compatible with said node of said object model.

12. The method according to claim 11,
wherein if the transformation step template (TST) is compatible with the node of said object model a transformation step instance (TSI) of said transformation step template (TST) is generated and
transformation artifact identifiers (TA-ID) of transformation artifacts (TA) produced or used as input by said transformation step instance (TSI) are registered within a transformation registry (T-R) as produced or used as inputs by the said transformation step instance (TSI).

13. The method according to claims 2 and 12,
wherein the said transformation workflow is generated by merging identical transformation artifacts identifiers (TA-ID) within the transformation registry (T-R)

14. The method according to claim 13,
wherein transformation step instances (TSI) not located on transformation workflow paths connecting a model element of the object model with a model element of the target object model are deleted.

15. The method according to claims 10 and 12,
wherein the transformation step compatibility checker (TSCC) of a transformation step template (TST) registers transformation artifact identifiers (TA-ID) of transformation artifacts (TA) within said transformation registry (T-R) as used as inputs by different transformation step instances (TSI).

16. The method according to claim 14,
wherein a transformation step sequence list (TSSL) is generated for the transformation workflow indicating a sequence to execute the transformation step instances (TSI) of said transformation workflow.

17. The method according to claim 16,
wherein said transformation step instance sequence list (TSISL) is generated by means of a Dijkstra-algorithm.

18. The method according to claim 14,
wherein the deletion of said transformation step instance TSI is performed by means of a reversed Dijkstra-algorithm.

19. The method according to claim 10,
wherein transformation step instances (TSI) are executed by executing transformation step code (TSC) from transformation step templates (TST) correspondent to said transformation step instances (TSI).

20. The method according to claim 19,
wherein the transformation step code (TSC) invokes an external application program.

21. The method according to claim 1,
wherein the transformation workflow is executed by a computer program.

22. An MDA-tool program module comprising instructions for performing the method according to claims 1 to 20.

23. A transformation system which transforms an object model into a target object model or into heterogeneous software product artifacts by executing a transformation workflow automatically generated on the basis of transformation artifacts (TA) produced or used as inputs by transformation step instances (TSI) derived from pre-defined transformation step templates (TST) stored in a library of said transformation system.

24. The transformation system according to claim 23,
wherein the transformation step template (TST) comprises an executable transformation step compatibility checker (TSCC) and an executable transformation step code (TSC).
